# EUROPÄISCHE PATENTSCHRIFT

(11) **EP 1 431 885 B1**
(45) Veröffentlichungstag und Bekanntmachung des Hinweises auf die Patenterteilung: **21.09.2011**
(21) Anmeldenummer: 03028956.5
(22) Anmeldetag: 17.12.2003
(51) Int. Cl.: G06F 17/30

(54) **Verfahren zur Auswahl von Datensätzen**
Method for selecting data records
Procédé de sélection d'enregistrements de données

(30) Priorität: 17.12.2002 DE 10259206
(43) Veröffentlichungstag der Anmeldung: 23.06.2004
(73) Patentinhaber: Travel Tainment AG, 52146 Würselen/Aachen (DE)
(72) Erfinder: Usbeck, Ralf, 52076 Aachen (DE); Pfau, Markus, 52078 Aachen (DE); Schmitz, Lothar, 52146 Würselen (DE)
(74) Vertreter: Weisse, Renate

(56) Entgegenhaltungen:
- GB-A- 2 365 569
- US-A1- 2002 013 735
- FAGIN R ET AL: "ALLOWING USERS TO WEIGHT SEARCH TERMS" PROCEEDINGS OF RIAO, 12. April 2000 (2000-04-12), Seiten 682-700, XP001176853
- EIDENBERGER H ET AL: "An experimental study on the performance of visual information retrieval similarity models" PROCEEDINGS OF 2002 IEEE WORKSHOP ON MULTIMEDIA SIGNAL PROCESSING, 9. Dezember 2002 (2002-12-09), - 11. Dezember 2002 (2002-12-11) Seiten 233-236, XP010642554 VIRGIN ISLANDS, USA ISBN: 0-7803-7713-3
- ORTEGA M ET AL: "Supporting ranked Boolean similarity queries in MARS" IEEE TRANSACTIONS ON KNOWLEDGE AND DATA ENGINEERING IEEE USA, Bd. 10, Nr. 6, November 1998 (1998-11), Seiten 905-925, XP002327731 ISSN: 1041-4347
- PYLE, D: "Data Preparation for Data Mining" 1999, MORGAN & KAUFMAN , SAN FRANCISCO , XP002327732 ISBN: 1-55860-529-0 Abschnitt 2.6.2
- KEOGH E ET AL: "Ensemble index: A new Approach to indexing large databases" PROCEEDINGS OF THE 7TH. ACM SIGKDD INTERNATIONAL CONFERENCE ON KNOWLEDGE DISCOVERY AND DATA MINING. KDD-2001. SAN FRANCISCO, CA, AUG. 26 - 29, 2001, INTERNATIONAL CONFERENCE ON KNOWLEDGE DISCOVERY AND DATA MINING, NEW YORK, NY : ACM, US, 26. August 2001 (2001-08-26), Seiten 117-125, XP002961208 ISBN: 1-58113-391-X
- CHAUDHURI S ET AL: "An overview of data warehousing and OLAP technology" SIGMOD RECORD, ASSOCIATION FOR COMPUTING MACHINERY, NEW YORK, US, Bd. 26, Nr. 1, März 1997 (1997-03), Seiten 65-74, XP002115173
- NAZERI Z. ET AL: "Experiences in mining aviation safety data", INTERNATIONAL CONFERENCE ON MANAGEMENT OF DATA, 21 May 2001 (2001-05-21), - 24 May 2001 (2001-05-24), SANTA BARBARA, USA
- BOBROWSKI S.: "Oracle8 Architecture", OSBORNE MCGRAW-HILL / ORACLE RRESS, BERKELEY, USA

## Beschreibung

### Technisches Gebiet

Die Erfindung betrifft ein Verfahren zur Auswahl eines oder mehrerer Datensätze aus einer Datenbank, wobei jeder Datensatz aus Werten zu einem Eigenschaften repräsentierenden Parametersatz aus einer konstanten Anzahl unterschiedlicher Parameter besteht, mit den Schritten
(a) Eingabe eines oder mehrerer Auswahlkriterien,
(b) Lesen und Gruppieren der Datensätze, wobei die Gruppierung der Datensätze aus der Datenbank vor der Eingabe der Auswahlkriterien erfolgt und die so gruppierten Datensätze vor der Eingabe der Auswahlkriterien gesondert in einem Speicher gespeichert werden, und
(c) Ausgabe ausgewählter Datensätze.

Solche Datensätze können zum Beispiel Reisen sein. Jede Reine hat bestimmte Eigenschaften wie Anbieter, Abflughafen, Reisedatum, Zielort, Hotelname und Preis. Diese Eigenschaften werden dann als Datensatz in einer Datenbank abgelegt. Auf die Datenbank kann dann sequentiell zugegriffen werden, wenn eine Datenbankabfrage erfolgt. Dabei wird zunächst der Datensatz eingelesen und es werden Klassifizierungen bezüglich der Auswahlkriterien auf die auf nicht redundante, einmalig erzeugte Datenmengen angewendet. Dann wird für jeden einzelnen Datensatz der Gesamtdatenmenge unter Zuhilfenahme der zuvor klassifizierten Unterdatenmengen eine Gesamttrefferquote ermittelt. Die Gesamttrefferquote wird mit den Grenzkriterien der vorgegebenen Auswahlkriterien verglichen und als Treffer gespeichert, wenn die Auswahlkriterien erfüllt sind.

Eine solche Datenbank kann mehrere hundert Millionen Datensätze enthalten. Entsprechend vergeht auch bei hohen Rechnerleistungen und kurzen Zugriffszeiten auf den Datenspeicher eine gewisse Zeitspanne, bis die Ergebnisse vorliegen und ausgegeben werden. Die Ausgabe erfolgt zum Beispiel auf einem Bildschirm, in einer Datei oder über einen Drucker.

Je nach Anzahl der Auswahlkriterien übersteigt die Anzahl der ausgewählten Datensätze ein gewünschtes Maß und muß durch Hinzufügung weiterer Auswahlkriterien weiter reduziert werden. Umgekehrt kann eine zu enge Auswahl auch dazu führen, daß keine Treffer erzeugt werden, obwohl Datensätze in der Datenbank vorliegen. In beiden Fällen sind weitere Eingaben zur Modifizierung der Anfrage erforderlich.

### Stand der Technik

Auf der Internetseite "http://www.bucherreisen.de/" ist am 12.Dezember 2002 eine Suchmaschine für Ferienreisen offenbart. Die Suchmaschine ermöglicht die Auswahl einer Reise aus einer Datenbank mit über einer Million Reiseangeboten. Dabei können folgende Auswahlkriterien angegeben werden: "Flug und Hotel, bzw. Nur Flug", "Reiseziel", "Anzahl der mitreisenden Erwachsenen und Kinder", "Abflughafen", "Aufenthaltsdauer", "Preis", "Früheste Hinreise und späteste Rückreise", "Hotelkategorie" und "Verpflegung".

Die Auswahl der Option "Flug und Hotel" bzw. "Nur Flug" erfolgt durch Anklicken einer Tickbox. Dabei kann jeweils nur eine der beiden Boxen aktiviert werden. Ist die Option "Nur Flug" aktiviert, so steht eine Auswahl der Hotelkategorie und der Verpflegung nicht zur Verfügung. Das bedeutet, daß bei Auswahl der Optionen "Flug und Hotel, bzw. Nur Flug" die Auswahlmöglichkeiten einiger der übrigen Optionen angepasst werden.

Auch bei der Auswahl der Option "Reiseziel" werden die Auswahlmöglichkeiten der übrigen Optionen angepasst. Das Reiseziel kann mittels einer Drop-Down-Liste ausgewählt werden. Dabei werden alle angebotenen Reiseziele in der Liste aufgeführt und können dort für die Auswahl aktiviert werden. Wird das Reiseziel ausgewählt, so werden im Drop-Down-Liste "Abflughafen" nur noch diejenigen Flughäfen angezeigt, die das Reiseziel auch anfliegen. Dadurch wird von vorneherein vermieden, daß keine unmögliche Auswahl getroffen wird. Es ist auch möglich, Gruppen von Flughäfen auszuwählen. Dabei sind Flughäfen unter "Region Nord", "Region Süd" oder auch "alle Flughäfen" zusammengefasst und werden als ODER-Option aufgefasst.

Bei fehlerhaften Eingaben, etwa, wenn das Rückreisedatum vor dem Hinreisedatum liegt, wird eine Fehlermeldung generiert. Die Hotelkategorie wird als Bereich angegeben: alle Hotels sind "ab 3 Sterne", "ab 4 Sterne" etc. und der Preis ist als Maximalwert "bis 500 Euro", "bis 600 Euro" etc. auszuwählen.

Durch Aktivierung eines Feldes "Angebot finden" wird die Datenbankabfrage durchgeführt. Dabei kommt es vor, daß kein Ergebnis erzielt wird. Dies liegt daran, daß nur solche Datensätze ausgewählt werden, welche die Auswahlkriterien erfüllen. In einer Hilfefunktion wird darauf hingewiesen, daß Angaben in zu vielen Auswahlfeldern dazu führen kann, daß kein Ergebnis erzielt wird. In diesem Fall muß der Nutzer die Abfrage ändern und erneut durchführen. Dies ist besonders zeitaufwendig. Bei jeder Datenbankabfrage müssen alle Datensätze auf Übereinstimmungen überprüft werden.

Zur Erleichterung wird eine gesonderte Datenbankabfrage zu bestimmten Themen durchgeführt. So kann eine verkleinerte Liste etwa "Single-Reisen" aufgerufen werden, ohne die gesamte Datenbank abzufragen. Bei dieser Reduzierung der Datensätze stehen aber nicht alle angebotenen Reise zur Verfügung.

Die Suchergebnisse werden gewöhnlich nach dem Preis sortiert. Wird eine längere Zeitspanne als mögliche Reisezeit abgefragt, dann werden die Ergebnisse zuerst nach Datum und dann erst nach Preis sortiert. Das kann je nach Präferenz des Nutzers zu einer unbefriedigenden Sortierung führen. Um dem Problem gerecht zu werden, sind Sortier- und Filter-Boxen vorgesehen, über welche die Ergebnisliste gefiltert werden kann. Auch hier muß ein weiterer, zeitaufwendiger Rechenvorgang erfolgen. Eine Sortierung oder Filterung kann zum Beispiel nach dem Preis, dem Abflughafen oder der Dauer erfolgen. Dadurch wird aber nur die bestehende Ergebnisliste weiter reduziert.

Unabhängig von der Anfrage sind in jedem Fall Antwortzeiten im Sekunden-Bereich üblich, auch wenn kein Treffer erzielt wird. Wird kein Treffer erzielt, so muß die Anfrage wiederholt werden, was zu weiteren Wartezeiten führt. Dies kann zur Überlastung des Datenbankrechners und der Kommunikationswege führen. In jedem Fall aber muß ein erhöhter technischer Aufwand betrieben werden, um die hohe Anzahl der Anfragen zu bearbeiten.

Es ist weiterhin, z.B. aus der Internet-Seite "http://www.ltur.de" vom 12.Dezember 2002 bekannt, die Anfrage zu staffeln, wobei die Ergebnislisten bereits nach der ersten Auswahl angezeigt wird. Das bedeutet, daß durch die Abfrage eine Gruppierung der Datensätze durchgeführt wird. Es erfolgt eine frühe Reduzierung der Größe der Datenbank. Der Nutzer kann sehen, welche weitere Optionen bei den Auswahlkriterien zu einem Treffer führen und welche nicht. Dann ist aber eine mehrfache Abfrage der verbleibende Daten erforderlich.

Aus der Internet-Seite "http://www.start.de/" ist es bekannt, einen Auswahlassistenten vorzusehen. Dabei erfolgt die Auswahl ebenfalls jeweils nacheinander. Entsprechend werden auch hier die Datensätze gruppiert. Es werden immer nur solche Elemente zur Verfügung gestellt, welche auch auswählbar sind. Dadurch wird zwar immer ein Treffer generiert, aber es ist eine Vielzahl von Abfragen und mehrfacher Bildaufbau erforderlich.

In der Suchmaschine "http://www.rex.de" werden die Auswahlergebnisse mit einer Prozentzahl versehen und nach "Relevanz" sortiert. Wie die Prozentzahl zustandekommt ist nicht offenbart.

Die Druckschrift "Allowing users to weight search terms" von Ronald Fagin und Yoelle S. Maarek in Proceedings of RIAO, 12.Aprill 2000, S.682-700 XP001176853 offenbart die Suche von Dokumenten aus einer Datenbank. Dabei wird die Gewichtung eines Suchbegriffes nicht von Hand eingegeben, sondern die Gewichtung wird ermittelt, indem die Häufigkeit des Auftretens in den durchsuchten Dokumenten berücksichtigt wird. Alternativ werden die Ergebnisse neusortiert, indem weitere Suchbegriffe eingegeben werden oder innerhalb der Ergebnisse gesucht wird. Die Druckschrift beschäftigt sich ferner mit der Frage, wie eine Gewichtung eines Suchbegriffes in einem sinnvollen Algorithmus umgesetzt werden kann. Mit den dortigen Erkenntnissen ist es möglich, die Ergebnis- oder Trefferlisten in sinnvoller Reihenfolge anzuzeigen. Die Zugriffseiten bleiben jedoch unverändert.

Die Druckschrift Pyle, D. "Data preparation for data mining" 1999, Morgan & Kaufman, San Francisco, XP002327732 ISBN 1-55860-529-0 offenbart Verfahren zur Datenpflege. Die dort vorgeschlagenen Maßnahmen betreffen die Richtigkeit der Daten und das Auffinden von auffälligen Daten. Dabei wird beilspielsweise vorgeschlagen, Variablen zu entfernen, wenn diese nur einfach oder wenig mit Werten in den Datensätzen besetzt sind ("No change - no information"). Insbesondere gehen ggf. Daten verloren oder müssen von Hand geprüft werden. Die Fragestellung der verbesserten Zugriffszeiten ohne die Werte (Dateninhalte) zu verändern wird nicht behandelt.

Die US 2002/0013735 A1 offenbart eine Datenbanksuche in einer Datenbank, die aus Datensätzen besteht. Die dort beschriebenen Datensätze ähneln den oben aufgeführten Datensätzen. Die Druckschrift befasst sich mit der verbesserung der Ergebnisanzeige durch gewichtete Berücksichtigung von Auswahlkriterien. Eine Lösung, die Zugriffszeiten zu verbessern wird jedoch nicht vorgeschlagen.

NAZERI Z. ET AL: "Experiences in mining aviation safety data", International Conference on Management of Data, 21. Mai 2001, Santa Barbara, USA, XP001167383, offenbart ein Verfahren zur Auswahl von Datensätzen aufgrund einer Ähnlichkeifsfunktion im Bezug auf die einzelnen Auswahlkriterien aufgrund ihres Wertebereichs.

### Offenbarung der Erfindung

Es ist Aufgabe der Erfindung, ein Verfahren zu schaffen, bei welchem die Wartezeiten für den Nutzer verkürzt werden und die Anzahl der Wartezeiten verringert werden. Es ist weiterhin Aufgabe der Erfindung, ein Verfahren zu schaffen, bei welchem eine erhöhte Anzahl von Anfragen durch einen Rechner bearbeitet werden kann.

Erfindungsgemäß wird die Aufgabe durch den Gegenstand des unabhängigen Anspruchs gelöst.

Neben der Gruppierung kann auch eine Indizierung erfolgen. Bei der Gruppierung und Speicherung in einer neuen Datei kann auf redundante Datensätze verzichtet werden. Außerdem erlaubt die Gruppierung die Zuordnung von Daten in Formaten, die leichter lesbar sind. Das Einlesen eines Textformats dauert zum Beispiel länger, als das Einlesen eines Boolschen Wertes, da die damit verbundene Datenmenge kleiner ist. Auf diese Weise kann der Zugriff auf die gruppierten Daten in der neuen Datenbank und deren Verwendung bei der weiteren Berechnung wesentlich schneller erfolgen. Weiterhin sind durch die Gruppierung weniger Zugriffe auf den Datenspeicher erforderlich, bis die ausgewählten Datensätze gefunden werden.

Durch die Verringerung der Anzahl der Datenbankabfragen wird der Datenbankrechner und die angeschlossenen Kommunikationswege weniger belastet. Dies führt zusätzlich zu einer schnelleren Bearbeitung jeder einzelnen Abfrage.

Die Gruppierung und Indizierung der Datensätze aus der Datenbank erfolgt einmalig vor dem ersten Zugriff und die so gruppierten Datensätze werden aufgrund ihrer Datengröße im schnellen Arbeitsspeicher eines handelsüblichen Computers gehalten.

In einer Ausgestaltung der Erfindung wird wenigstens ein Auswahlkriterium mit einer Unschärfe berücksichtigt. Eine Unschärfe bei einem Auswahlkriterium bedeutet, daß ein Treffer auch dann erzielt wird, wenn das Auswahlkriterium nicht vollständig, sondern nur teilweise erfüllt ist. Wenn die Sportart zum Beispiel Tennis ausgewählt wird, die gewünschte Reise aber prinzipiell nur mit Squash angeboten wird oder ein allgemeines großes Sportangebot hat, dann wird ohne Unschärfe nie ein Treffer erzielt, mit Unschärfe wird jedoch ein Treffer erzielt. Durch die Berücksichtigung des Auswahlkriteriums mit einer Unschärfe wird entsprechend immer ein Treffer erzielt, egal wieviele Auswahlkriterien eingegeben werden. Dadurch wird die Mehrfachabfrage der Datenbank vermieden. Zusätzliche Belastungen des Datenbankrechners und der Kommunikationswege entfallen.

Die rechen- und zeitintensive Klassifizierung (Fuzzysierung) der Datensätze bei jeder Anfrage erfolgt nur auf nicht redundante Unterdatenmengen der Gesamtdatenmenge, welche einmalig während des Aufbaus der Datenbank durch Gruppierung und Indizierung erzeugt wurden. Darüberhinaus sind diese Unterdatenmengen im vorliegenden Anwendungsfall so kompakt, dass sie problemlos im schnellen Hauptspeicher (RAM) eines handelsüblichen Rechnersystems gehalten werden können. Das gilt auch für die Datensätze der Gesamtdatenmenge, die sich nach der einmalig erfolgten Gruppierung und Indizierung nur noch aus Verweisen (Zahlenindizes) auf die entsprechenden Unterdatenmengen zusammensetzt.

Die Ausführung der zeitaufwendigen Unschärfberechnung auf die Unterdatenmengen, welche nur jeweils eindeutige Vorkommen der in der Gesamtdatenmenge vorkommenden Merkmale enthalten, in Kombination mit dem anschliessenden einfachen und damit schnellen Berechnen der Gesamttrefferzahl der Gesamtdatemnenge über die Indizierung auf die nicht redundanten Unterdatenmengen stellt ein Verfahren dar, welches wesentlich schneller arbeitet als bisher bekannte Lösungen.

Die zeitintensive Berechnung der Kombinationsgewichtungen wird bei jeder Anfrage nur auf die Listen mit nicht redundante Vorkommen der Ursprungswerte ausgeführt. Durch die Berechnung der Kombingewichtungen können bei jedem Aufruf unterschiedliche mathematische Ansätze auf ein Merkmal angewendet werden.

Die Ergebnisse können nach der Qualität der Treffer, die zum Beispiel als Prozentwert angegeben werden kann, sortiert werden. Das beste Ergebnis wird dann zuerst angezeigt. Eine weitere Anfrage mit modifizierten Auswahlkriterien erübrigt sich, da die Modifizierung quasi selbstständig vorgenommen wird. In einer weiteren Ausgestaltung der Erfindung ist der Grad der Unschärfe vom Nutzer auswählbar. Dann kann der Nutzer selber auswählen, wie wichtig ihm ein Auswahlkriterium ist. Ist ein Abflugdatum zum Beispiel sehr wichtig und der Nutzer will nicht davon abweichen, dann interessieren ihn die Ergebnisse mit einem anderen Abflugdatum nicht. Demgegenüber ist der Nutzer bei der Angabe des Zielortes möglicherweise eher flexibel, solange nur das Abflugdatum stimmt. Dann kann er hier eine größere Unschärfe auswählen, so daß auch andere Zielorte berücksichtigt werden. Die Ergebnisse können in der Reihenfolge ihres Abstands vom gewünschten Ergebnis dargestellt werden. So können etwa die Zielorte nach ihrer Nähe zum gewünschten Zielort sortiert werden.

Bei der Verwendung von Unschärfen bei der Auswertung der Datenbank finden die Algorithmen und Gesetzmäßigkeiten der Fuzzy Logic Anwendung.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist ein Beispiel für eine Datenbank, wie sie ursprünglich vorliegt.
- Fig.2a: zeigt Listen zur Gruppierung von Daten
- Fig.2b: zeigt Daten, welche mit Hilfe der Listen aus Fig.2a gruppiert wurden
- Fig.3: ist ein Ablaufdiagramm für ein Auswahlverfahren
- Fig.4: zeigt eine Eingabemaske für Auswahlkriterien und Optionsgewichtungen mit Startwerten
- Fig.5: zeigt die Eingabemaske aus Fig.4, bei welcher Optionen und Gewichtungen für die Auswahlkriterien eingegeben wurden
- Fig.6: zeigt Zwischenergebnisse des Auswahlverfahrens nach Fig.3, welche in Form von Zielorten angegeben sind
- Fig.7: zeigt Zwischenergebnisse des Auswahlverfahrens nach Fig.3 für einen Zielort
- Fig.8: zeigt die Endergebnisse des Auswahlverfahrens nach Fig.4, bei dem auch alternative Reisen für ein identisches Hotel aufgelistet werden
- Fig.9: zeigt eine Buchungsmaske für eine ausgewählte Reise

### Beschreibung des Ausführungsbeispiels

Als Ausführungsbeispiel wird im folgenden eine Datenbank beschrieben, in welcher Urlaubsreisen gespeichert sind. Die Urlaubsreisen sollen für einen Nutzer online im Internet buchbar sein. Entsprechend ist es das Ziel, dem Nutzer möglichst nur solche Reisen aus der Datenbank anzubieten, die seinen Wünschen sehr nahe kommen. Je besser die Übereinstimmung der Reise mit den Wünschen des Nutzers, um so höher wird die Wahrscheinlichkeit, daß der Nutzer eine Reise buchen wird. Bei hoher Buchungszahl steigt auch die Wirtschaftlichkeit der Datenbank.

Die Datenbank setzt sich aus mehreren hundert Millionen Einträgen zusammen. Jeder Eintrag entspricht einer buchbaren Reise mit bestimmten Eigenschaften. Solche Eigenschaften sind der Reiseveranstalter, Abflughafen, Abflugdatum, Reisedauer, Zielort, Hotelkategorie, Hotelname, Art der Unterkunft, Verpflegung, Ausstattung des Hotels, Entfernung zum Strand, Sportangebot, Kinderfreundlichkeit (z.B. Kinderbetreuungsmöglichkeiten), Preis und Anzahl der Mitreisenden. Die Daten werden täglich aktualisiert, da Reisen ausgebucht sein können, aus anderen Gründen nicht mehr zur Verfügung stehen oder neue Reisen hinzukommen. Entsprechend ändert sich die Anzahl der Reisen und damit die Anzahl der Datensätze. Die Anzahl der Eigenschaften jeder Reise bleibt im allgemeinen konstant, solange nicht neue Eigenschaften (z.B. Tageshöchsttemperatur am Zielort) erfasst werden. Die Inhalte der Datensätze (Werte), zum Beispiel das Abflugdatum, ändern sich aber zumindest teilweise ebenso wie deren Anzahl. Umgekehrt bleiben einige Werte in den jeweiligen Datensätzen dauerhaft gleich. Der Reiseveranstalter oder der Abflughafen stellt eine dauerhafte Eigenschaft dar.

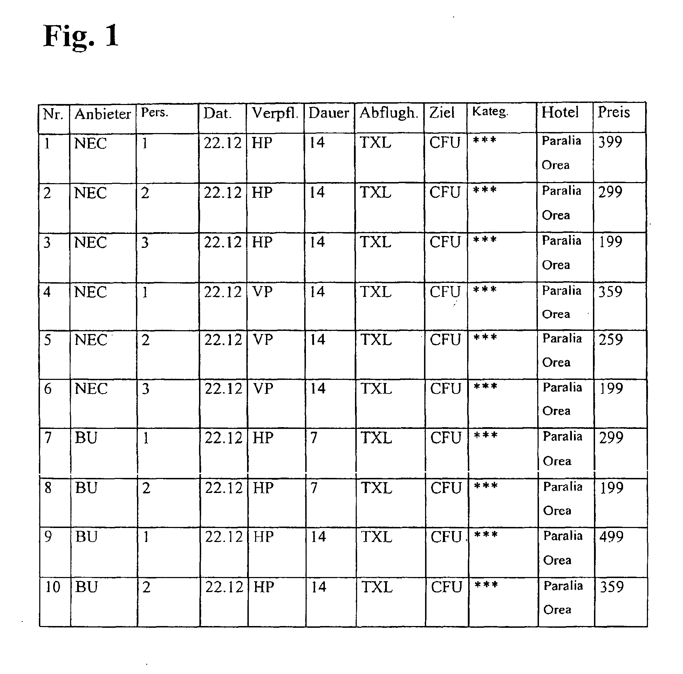

Ein Beispiel für einen Ausschnitt aus einer solchen Datenbank ist in Fig. 1 gezeigt. Die Datenbank weist 10 unterschiedliche Datensätze auf. Jeder Datensatz ist in einer Zeile gespeichert und mit einem Datensatzindex versehen. Der Index ist in der ersten Spalte vorgesehen und ist im vorliegenden Fall eine laufende Nummerierung. Der Index ist entsprechend ein Integer mit einem Wert zwischen 1 und 10.

In der zweiten Spalte ist der Veranstalter der jeweiligen in einem Datensatz repräsentierten Reise dargestellt. Jeder Veranstalter wird mit bis zu drei Buchstaben gekennzeichnet. Im vorliegenden Fall ist ein erster Veranstalter "NEC" und ein zweiter Veranstalter "BU" vorgesehen. Die Veranstalterdaten werden also als String mit 3 Buchstaben gespeichert.

In der dritten Spalte jedes Datensatzes ist die Anzahl der mitreisenden Personen gespeichert. Diese Angabe liegt als Integer vor. Im vorliegenden Beispiel gibt es Reisen für 1, 2 und 3 Personen.

In der vierten Spalte ist das Abflugdatum als Datum gespeichert. Im vorliegenden Fall ist immer das gleiche Datum gewählt, nämlich der 22.12.

In der fünften Spalte ist die Art der Verpflegung angegeben. Hierfür wird ein String mit zwei Buchstaben verwendet. Die Buchstaben sind kodiert. So bezeichnet "HP" Halbpension und "VP" Vollpension.

In der sechsten Spalte ist die Reisedauer der angebotenen Reise angegeben. Die Reisedauer wird in Tagen angegeben. Im vorliegenden Fall gibt es Reisen mit einer Dauer von 7 oder 14 Tagen.

In den Spalten 7 bis 10 werden der Abflughafen, der Zielflughafen, der Hotelname und die Kategorie in Sternen angegeben. Für die Bezeichnung der Flughäfen wird jeweils ein String mit drei Buchstaben verwendet, welcher der internationalen Kurzbezeichnung entspricht. "TXL" im vorliegenden Beispiel ist der String für den Abflughafen "Berlin-Tegel" und "CFU" analog der Zielflughafen "Kerkyra". Die Kategorie in Hotelsternen und der Hotelname werden ausgeschrieben als String eingegeben. Im vorliegenden Beispiel handelt es sich bei jeder Reise um das Hotel mit dem Namen "Paralia Orea", welches drei Hotelsterne aufweist. Die letzte Spalte beinhaltet den Preis in Euro und ist ebenfalls als Integer gespeichert.

Aus dieser Datenbank soll nun ein Nutzer die Reise auswählen, die seinen Vorstellungen am ehesten entspricht. Hierfür kann er Auswahlkriterien mittels einer Abfrageoberfläche über das Internet eingeben und die Datenbank durchsuchen. Die Reisen, die den Vorstellungen des Nutzers am besten entsprechen sollen im Ergebnis als erstes angezeigt werden. Ungeeignete Reisen sollen nicht gezeigt werden, solange geeignetere Reisen gefunden werden.

Da die Datenbank sehr viele Datensätze enthält, würde ein direkter Zugriff durch den Nutzer sehr lange Zeit in Anspruch nehmen. Die Datenbank wird daher zunächst für die Nutzung vorbereitet und in vorbereiteter Form abgespeichert. Hierfür werden nicht redundante Listen erstellt. In jeder Liste befinden sich die Daten, die in den verschiedenen Spalten der Datenbank auftreten. So werden für den vorliegenden Fall 10 Listen entsprechend den 10 Parametern (Spalten) ohne die Indexspalte erstellt.

Die erste Liste ist die Anbieterliste. In dieser Liste sind alle vorkommenden Anbieter aufgezählt. Im vorliegenden Fall lautet die Liste: {NEC; BU}. An erster Stelle der Anbieterliste ist der Anbieter mit der Kurzbezeichnung "NEC" und an zweiter Stelle ist der Anbieter mit der Kurzbezeichnung "BU" angegeben. Statt "NEC" kann also auch in der neuen, vorbereiteten Datenbank "0" stehen, entsprechend dem ersten Wert der Anbieterliste und statt "BU" kann "1" stehen. Diese Werte sind Boolsche Werte oder Integer und sind im binomischen Zahlensystem mit wesentlich weniger Stellen darstellbar als Strings. Entsprechend verringert sich an dieser Stelle nicht nur der benötigte Speicherplatz, sondern auch die Auslesezeit. Anders ausgedrückt: "1" lässt sich im Computer wesentlich schneller lesen als "BU" und nimmt weniger Speicherplatz ein. Wenn nur zwei Werte vorliegen, reicht ein Feld mit einem Boolscher Wert 0 oder 1 aus, um eine hinreichende Charakterisierung einer Eigenschaft in Verbindung mit der zugehörigen Liste zu erreichen.

Das gleicher Verfahren wird auf die übrigen Dateninhalte angewendet. Die Personenliste entsprechend Spalte 3 lautet im vorliegenden Fall: {1; 2; 3}. Die Datumsliste weist nur einen Wert auf {22.12}. Wenn, wie hier, nur ein Wert vorliegt, braucht dieser Wert nicht mehr in der der neuen Datenbank entsprechenden Matrix gespeichert werden. Es reicht aus, wenn die Liste mit dem Wert gespeichert ist. Die Verpflegungsliste lautet {VP; HP}. Wird in der neuen Datenbank entsprechend eine Verpflegung "0" angegeben, so bedeutet dies, daß Vollpension angeboten wird. Bei "1" bedeutet dies hingegen, daß Halbpension (HP) angeboten wird. Auch dieser Wert kann statt als String in Form eines Integers oder gar als Boolscher Wert in die Matrix eingetragen werden.

Auch bei der Dauer der Reise existieren in dem Ausschnitt nur zwei verschiedene Werte. Die zugehörige Liste lautet {7; 14}. Ein Wert "0" in der Matrix bedeutet dann eine Reisedauer von 7 Tagen. Ein Wert "1" bedeutet dann eine Dauer von 14 Tagen. Im vorliegenden Beispiel sind Abflughafen, Zielflughafen, Kategorie und Hotelname für jede Reise identisch. In der Liste taucht dann jeweils der zugehörige Wert auf. Da die Liste nur diesen Wert enthält, braucht in der Matrix überhaupt kein Feld vorgesehen werden.

In der letzten Spalte sind verschiedene Reisepreise angegeben. Die zugehörige Liste lautet: {199; 259; 299; 359; 399; 499}. Wie bereits oben erwähnt, tauchen die Werte 199 und 299 zwar zweimal auf, sie werden jedoch nur einmal in der Preisliste aufgeführt. Jedesmal, wenn eine Reise mit einem Preis von 199 Euro angeboten wird, wird der Wert in dem zugehörigen Matrixfeld auf "0" gesetzt. Die 0 ergibt sich daraus, daß der Preis 199 Euro an 0. Stelle in der Liste aufgeführt ist. Bei einem Reisepreis von 299 Euro würde der Wert auf "2" gesetzt.

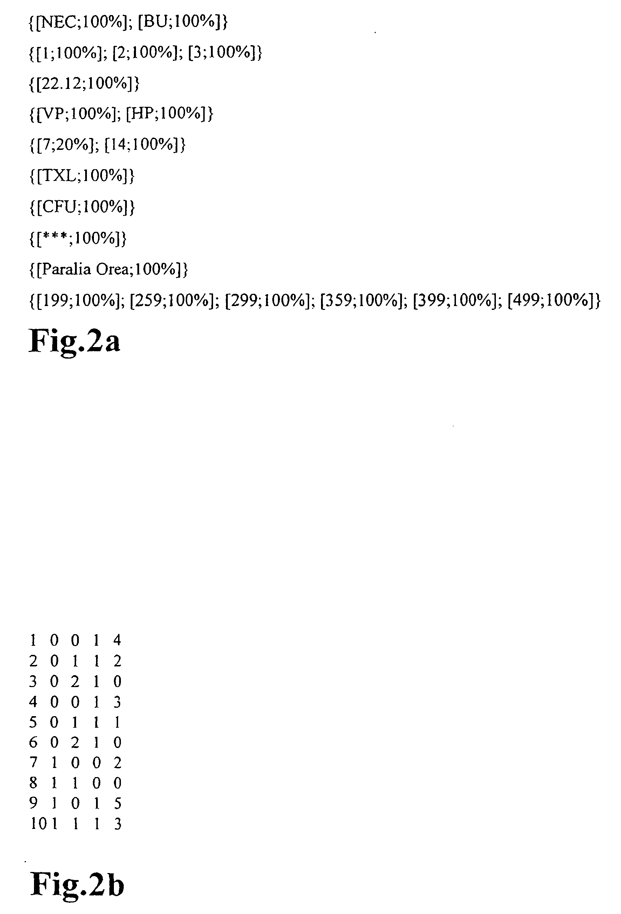

Zusammen mit diesen Listen lässt sich die in Fig.1 dargestellte Datenbank zusammenfassen und erhält dann die Form einer Matrix, wie sie in Fig. 2 dargestellt ist. Die Matrix enthält 10 Zeilen und nur 5 Spalten und besteht ausschließlich aus kleinen Zahlen. Sie ist auch im Praxisfall bei großen Datenmengen klein genug, um vollständig in den Arbeitsspeicher einlesbar zu sein. Es ist leicht einzusehen, daß eine solche Matrix wesentlich schneller auszulesen ist, als eine Datenbank auf einer Festplatte, wie sie in Fig.1 dargestellt ist. Die Zugriffszeiten werden daher wesentlich reduziert, ohne den Informationsgehalt der Datenbank zu beschränken. Dabei gehören zu der Datenbank selbstverständlich immer die Indexlisten, welche in Fig.2a nochmals gesondert dargestellt sind.

Die Vorbereitung einer solchen Matrix erfolgt bereits vor der ersten Abfrage durch einen Nutzer. Sie kann zum Beispiel bei Reisedatenbanken nach dem täglichen Einlesen der aktuellen Daten erfolgen. Das bedeutet, daß der Nutzer in jedem Fall, auch bereits bei der ersten Abfrage von einer verkürzten Abfragedauer profitiert.

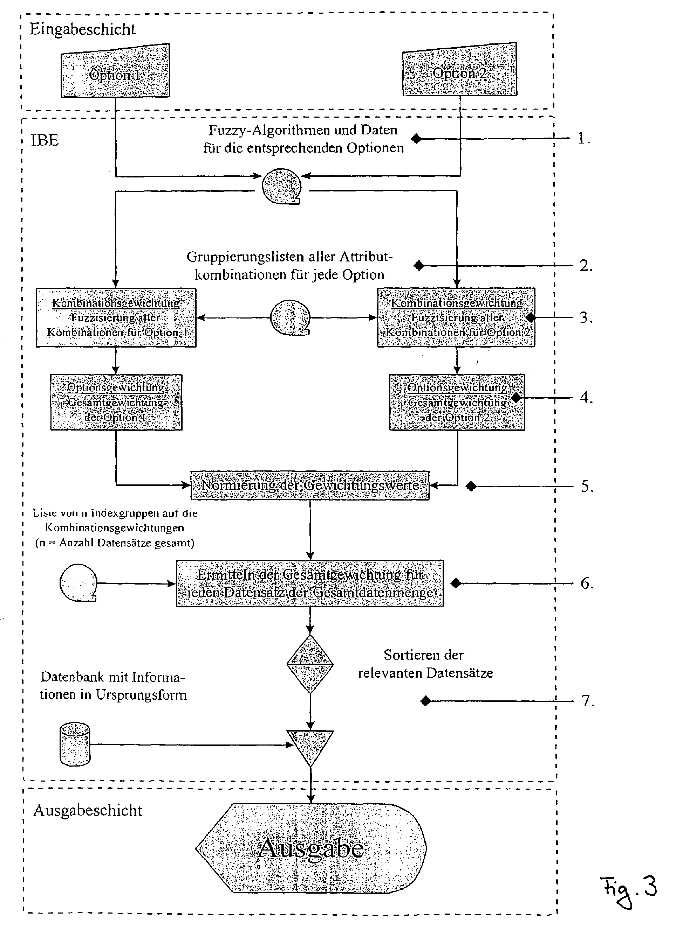

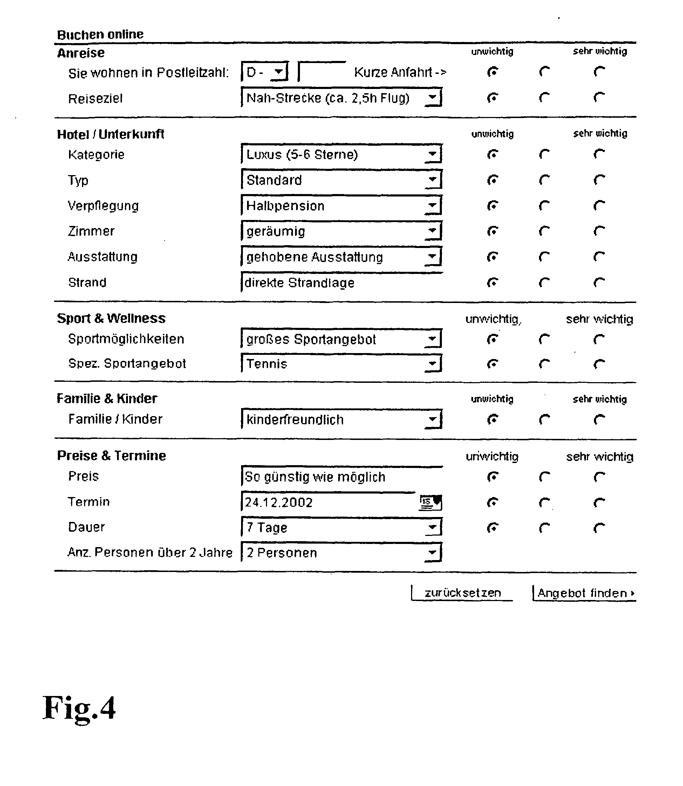

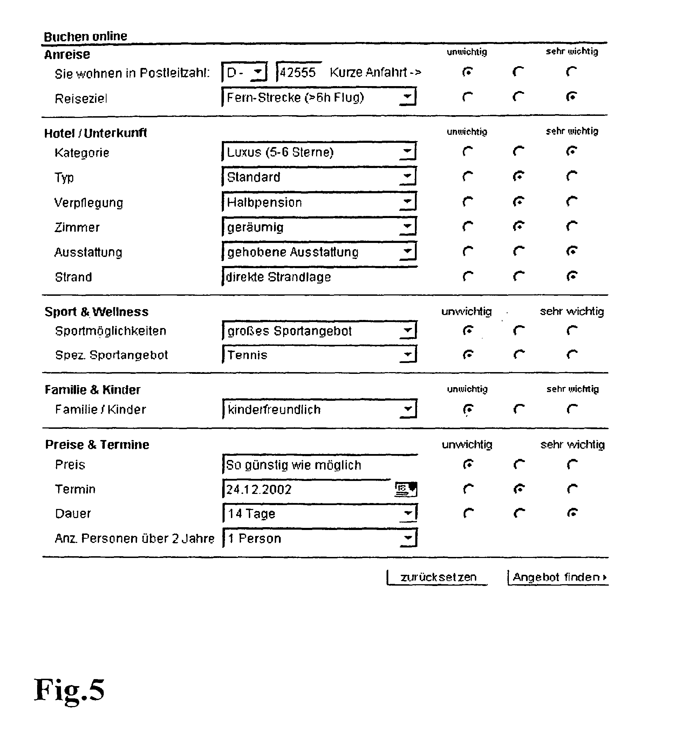

Das Auswahlverfahren ist im Ablaufdiagramm in Fig.3 dargestellt. Zunächst erfolgt eine Eingabe der Auswahlkriterien. Hierfür wird eine Eingabemaske verwendet, die in Fig.4 dargestellt ist. In der Maske werden Auswahlkriterien, wie verschiedene Anreiseoptionen, Hoteloptionen, Sportoptionen etc. zur Verfügung gestellt. Dabei werden Drop-Down-Menüs verwendet, in welchen zulässige Optionen angeboten werden. In Fig. 4 ist die Anfangseinstellung dargestellt. Darin wird ein typisches Reiseprofil angezeigt. In Fig.5 ist eine Einstellung gezeigt, bei welcher ein Nutzer Eingaben gemacht hat. So wurde zum Beispiel statt der Voreinstellung "Nah-Strecke (ca 2,5h Flug)" als Reiseziel, die Option "Fern-Strecke (> 6h Flug)" ausgewählt.

Neben jeder Option (bis auf die Personenzahl) ist eine Gewichtung angegeben. Dabei kann der Nutzer in drei Stufen angeben, wie wichtig die Option für ihn ist. Wenn eine Option zwar ausgeübt wird, diese aber nicht unbedingt notwendig ist, so kann der Nutzer die Tickbox "unwichtig" aktivieren. Legt der Nutzer hingegen großen Wert auf die Verwirklichung einer Option, so wird er die Tickbox "sehr wichtig" aktivieren. Auch eine mittlere Wichtigkeit ist vorgesehen. Die Wichtigkeit, die der Nutzer einer Option einräumt, wird in Form des Unschärfegrads bei der Auswertung berücksichtigt. "sehr wichtig" bedeutet, daß die Option mit geringer Unschärfe berücksichtigt werden soll. "Unwichtig" bedeutet, daß die Option mit großer Unschärfe berücksichtigt werden darf.

In der Eingabemaske wurden alle Wichtigkeiten auf "unwichtig" als Startwert gesetzt. Verändert ein Nutzer einen Startwert, so wird die Wichtigkeit auf "mittlere Wichtigkeit" gesetzt. Der Nutzer kann den Wert dann von Hand auf den gewünschten Wert setzen. Da überhaupt eine Eingabe stattgefunden hat, ist davon auszugehen, daß die angewählte Option mit höherer Wahrscheinlichkeit zumindest eine mittlere Wichtigkeit aufweist, als daß sie völlig unwichtig ist. Die Auswahl soll möglichst schnell und mit möglichst wenig Eingaben erfolgen. Wenn der Wert für die Wichtigkeit so gesetzt wird, daß er die höchste Wahrscheinlichkeit aufweist, dann werden weniger Eingaben bei gleicher Ergebnisqualität benötigt.

Der eingegebene Wert stellt bei der Auswahl einen Sollwert dar. Im vorliegenden Beispiel wurde etwa der Startwert für die Dauer von 7 Tagen auf den Sollwert "14 Tage" geändert. Dabei wird die Wichtigkeit programmseitig auf mittlere Wichtigkeit gesetzt. Die Wichtigkeit wurde dann vom Nutzer noch höher eingestuft und wird mit "sehr wichtig" angegeben. Es ist dem Nutzer also sehr wichtig, für 14 Tage zu verreisen.

Für die Reisedauer-Liste (s. Fig. 2a) mit den Werten 7 und 14 werden nun Abstände zum Sollwert berechnet. Hierzu werden die Gesetzmäßigkeiten der Vektor- und Matrizenrechnung hinzugezogen. Im vorliegenden Fall ist der Abstand des ersten Listenelements "-7" und der Abstand des zweiten Listenelements "0". Wenn weitere Elemente vorliegen, wird der Abstand als Differenz zwischen Sollwert und Istwert angegeben. Jedem Abstand ist ein Gewicht entsprechend einer Zuordnung zugeordnet. Die Zuordnungsvorschrift kann als numerische Tabelle, als Kennfeldlinie oder als funktioneller Zusammenhang vorliegen. Ein Beispiel für eine solche Zuordnungstabelle kann folgendermaßen aussehen:

| Abstand [Tagen] | Gewicht [%] |
|---|---|
| - 14 | 0 |
| - 7 | 20 |
| - 5 | 30 |
| - 4 | 50 |
| - 3 | 70 |
| - 2 | 80 |
| - 1 | 95 |
| 0 | 100 |
| +1 | 95 |
| +2 | 80 |
| +3 | 70 |
| +4 | 55 |
| +5 | 35 |
| +7 | 25 |
| +14 | 5 |

Selbstverständlich brauchen nur solche Werte in der Tabelle aufgeführt werden, für die prinzipiell Werte vorkommen können. Wenn von keinem Veranstalter zu keinem Zeitpunkt Reisen angeboten werden die einen Abstand von allen anderen Reisen von 6 Tagen haben, ist eine Zuordnung des Wertes nicht erforderlich.
Während des Erzeugens einer neuen Datenbank werden alle Listen automatisch durch Gruppierung erzeugt. Daher ist immer gewährleistet dass in den Listen nur Werte vorhanden sind welche auch für die Auswertung relevant sind.

Im Beispiel von Fig.5 wurde eine Reisedauer von 14 Tagen ausgewählt. Die Reisen Nr. 7 und 8 haben eine Reisedauer von 7 Tagen. Der Abstand der Werte ist -7. Aus der Zuordnungstabelle ergibt sich, daß Datensätze, die diesen Abstand aufweisen, mit einem Gewicht von 20 % berücksichtigt werden können (Kombinationsgewichtung). Wie sich aus der Tabelle ergibt, spielt es ebenfalls eine Rolle, ob die Reise kürzer oder länger ist, als der Sollwert. Eine um die gleiche Zeitspanne längere Reise erhält ein höheres Gewicht, als die entsprechend kürzere Reise. Die Berechnung der Kombinationsgewichte braucht nur für die Werte der Listen (Fig. 2a) durchgeführt werden und nicht für die Datensätze der Datenbank. Entsprechend umfasst die Berechnung weniger Rechenschritte und ist erheblich weniger zeitaufwendig.

Es wird nun jedes Feld der einzelnen Listen in Fig. 2a nicht mehr nur mit einem Wert, sondern einem Wertepaar belegt. Das Wertepaar umfasst zum einen den Wert selbst in Form des Sollwertertes. Zum anderen umfasst das Wertepaar das Gewicht des Wertes (Kombinationsgewicht). Die Dauer von 7 Tagen einer Reise ist in Fig.2a an Position 0 dargestellt. Dieser Wert hat ein Gewicht von 20% (s.oben). Entsprechend lautet dieses Wertepaar mit dem Index 0 in der Liste: [7;20%]. Da auf jede Liste unterschiedliche, vom Benutzer auswählbare, Berechnungsvorschriften angewendet werden können (schärfer, unschärfer), erfolgt die Qualifizierung der Sollwerte bei jeder Anfrage dynamisch.

Im Anschluß and die Gewichtung der Abstandswerte, wird die Gewichtung durch den Nutzer berücksichtigt (Optionsgewichte). Gibt ein Nutzer den Wert "sehr wichtig" ein, so wird die Eingabe zu 100% gewichtet. Gibt ein Nutzer den Wert "unwichtig" ein, so wird die Eingabe zum Beispiel nur mit 10 % berücksichtigt. Mit dieser Eingabe wird angegeben, wie wichtig es für den Nutzer ist, hier einen guten Treffer zu landen.

Jede Gruppe hat weiterhin eine ihr eigene, vorgegebene Gewichtung (Gruppengewichtung). So ist das Kriterium "Hotel-Ausstattung" mit einem geringeren Gewicht versehen, als das Reisedatum oder das Reiseziel. Wird dann der Ausstattung und dem Reiseziel vom Nutzer die gleiche Wichtigkeit zugemessen, so werden kleine Abstände des Reiseziels vom Sollwert höher bewertet. Das heißt, hier wird eine höhere Gruppengewichtung angenommen, als bei den Werten der Ausstattung. Die Gruppengewichtung kann vom Nutzer umgangen werden, wenn er eine anderslautende Optionsgewichtung durch Eingabe der entsprechenden Wichtigkeit vornimmt. Die Priorisierung der Gruppen, d.h. der Auswahlkriterien entspricht den praktischen Erfahrungen. Aus den Kombinationsgewichten, die sich aus den Abständen vom Sollwert ergeben, der Gruppengewichtung für die Auswahlkriterien, und der vom Nutzer eingegebenen Optionsgewichtung wird eine Gesamtgewichtung für jeden Datensatz berechnet.

Die Gesamtgewichtung wird nach folgendem Verfahren berechnet: zunächst werden die Kombinationsgewichtungen für jede Option einzeln mit den Optionsgewichtungen multipliziert. Alle Kombinationsgewichtungen für die Personenzahl in Prozent werden also mit der Optionsgewichtung für Personenzahlen in Prozent multipliziert. Dann werden alle Kombinationsgewichtungen für das Datum mit der Optionsgewichtung für das Datum multipliziert. Dies wird für alle in der Matrix enthaltenen Elemente eines Datensatzes (die in einer Reihe in der Matrix stehen) durchgeführt. Im nächsten Berechnungsschritt werden diese Produkte über eine ganze Zeile der Matrix summiert, indem über den jeweiligen Index in der Matrix der Gewichtungswert aus der entsprechenden Liste ausgelesen werden. Die Summe wird durch die Summe der Optionsgewichtungen dividiert. Als Ergebnis erhält man einen ersten Gewichtungswert, der auf den Nutzerwünschen und den angebotenen Reisen basiert. Jeder Datensatz wird nach diesem Prinzip abgearbeitet.

Ein zweiter Gewichtungswert basiert auf der Gruppengewichtung der angebotenen Reisen. Dieser wird nach dem selben Prinzip wie der erste Gewichtungswert berechnet. Es werden jedoch zusätzlich zu den Optionsgewichtungen die Gruppengewichtungen eingesetzt. Dazu werden die Gruppengewichtungen und Optionsgewichtungen einer Gruppe miteinander zu einem Produkt multipliziert, mit dem dann die oben beschriebene Kombinationsgewichtung durchgeführt wird. Wird diese Berechnung für jeden Datensatz durchgeführt, so erhält man am Ende eine Vielzahl von Gesamtgewichten, die für die Reise charakteristisch sind und die Nutzerwünsche berücksichtigen.

Man erhält eine Zahl in %, die die Qualität des Treffers angibt. Die Prozentzahl gibt an, wie gut die jeweilige Reise die Wünsche des Nutzers erfüllt. Das Gesamtgewicht kann für alle Datensätze in vergleichsweise kurzer Zeit ermittelt werden. In jedem Fall wird auf diese Weise eine Trefferliste generiert. Diese Trefferliste wird nach dem Gesamtgewicht sortiert. Die Datensätze mit dem höchsten Gesamtgewicht sollen angezeigt werden. Zu diesem Zweck wird die ursprüngliche Position anhand der Nummerierung ermittelt. Danach werden für jede auszugebende Zeile der Matrix über den Index die reellen Daten aus den Listen zurückgelesen und zur Ausgabe vorbereitet. Da aber nur die interessantesten Daten mit hohen Gesamtgewichten eingelesen werden müssen, braucht die Datenbank nicht vollständig durchsucht werden.

Vor der Ausgabe werden die Gesamtgewichte oder die Einzelwerte normiert. So wird der Treffer mit dem höchsten Gesamtgewicht auf 100% gesetzt und die darunterliegenden Treffer entsprechend angepasst.

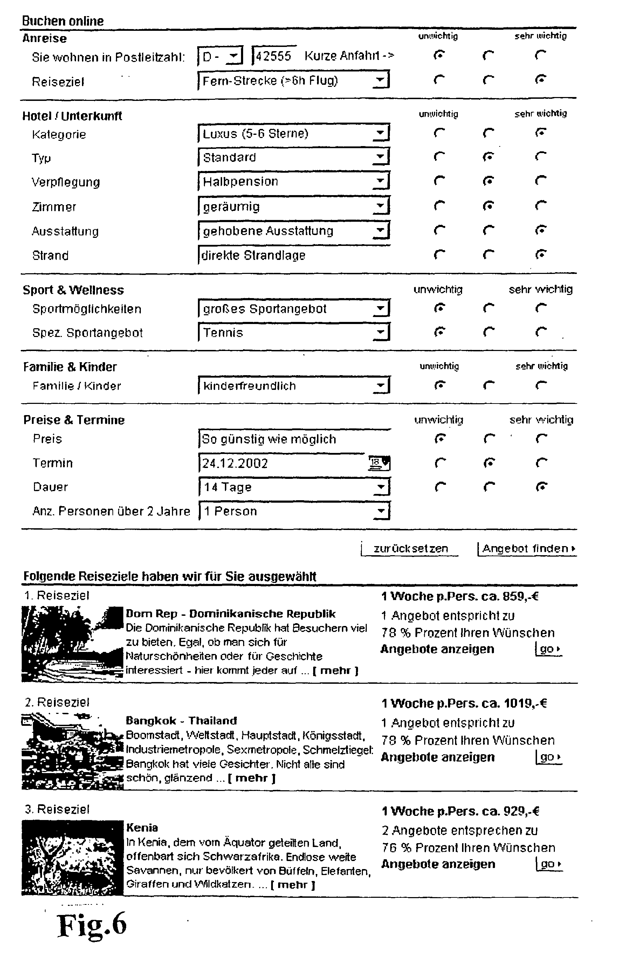

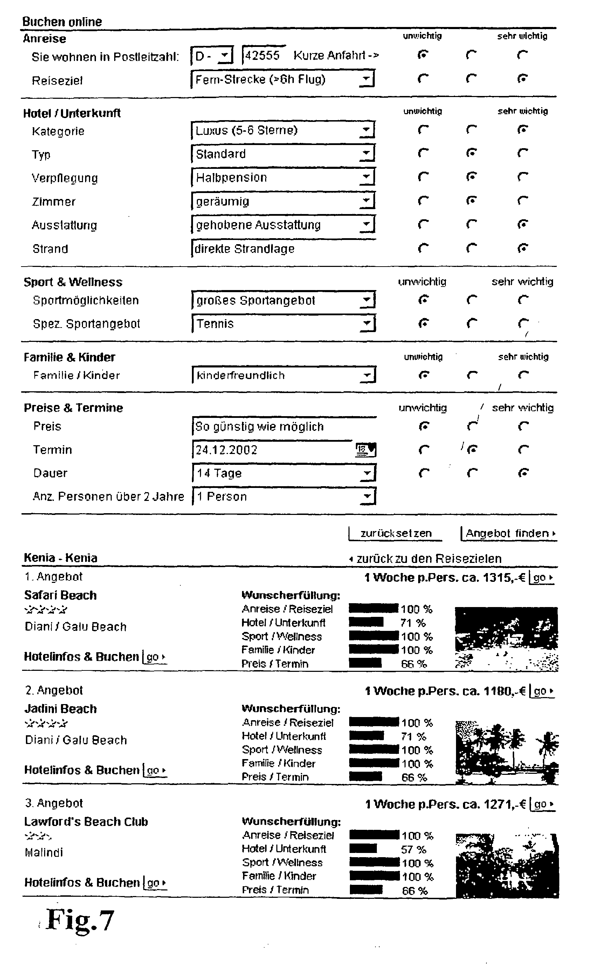

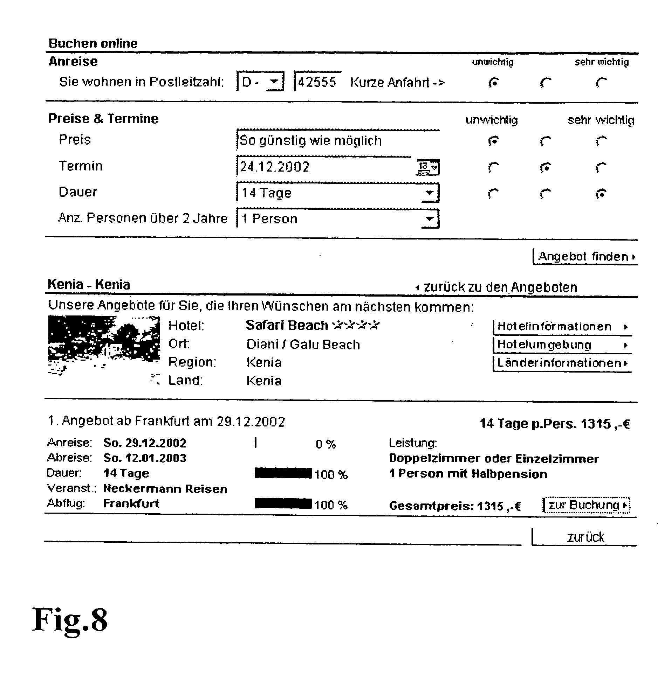

Die Ausgabe dieser Trefferliste erfolgt zunächst nach Zielgebieten, in welchen die besten Treffer liegen. Dies ist in Fig.6 für eine reale Datenbank dargestellt. Dabei werden die Ergebnisse mit dem Satz versehen: "1 Angebot entspricht zu 78% Ihren Wünschen". Die Angabe 78% entspricht dem Gesamtgewicht. Dann kann der Nutzer dasjenige Zielgebiet aussuchen, welches ihm am meisten gefällt. Bei Eingabe eines Zielgebiets wird dann das jeweilige Angebot im Detail angezeigt und es erfolgt eine Angabe, wie sich die Wunscherfüllung zusammensetzt. Dies ist in Fig.7 dargestellt. Im vorliegenden Fall setzt sich die Zahl 78 % zusammen aus Anreise/Reiseziel 100%, Hotel/Unterkunft 71%, Sport/Wellness 100%, Familie/Kinder 100% und Preis/Termin 66%. Zusätzlich werden die ursprünglich gemachten Eingaben angezeigt, damit der Nutzer sich noch erinnert und eine weitere Eingabe im gleichen Sinne verhindert. In einer weiteren Anzeige, die in Fig.8 dargestellt ist, werden nun alle Angebote für dieses Hotel aufgelistet, damit Angebote verschiedener Anbieter, Abflughäfen und dergleichen noch berücksichtigt werden können. Dort werden neben den Reisedaten wie Anreisedatum, Reisedauer und Abflughafen die Trefferqualität (Kombinationsgewichtung) angegeben. Es ist also angegeben, welche Reisen es noch gibt.

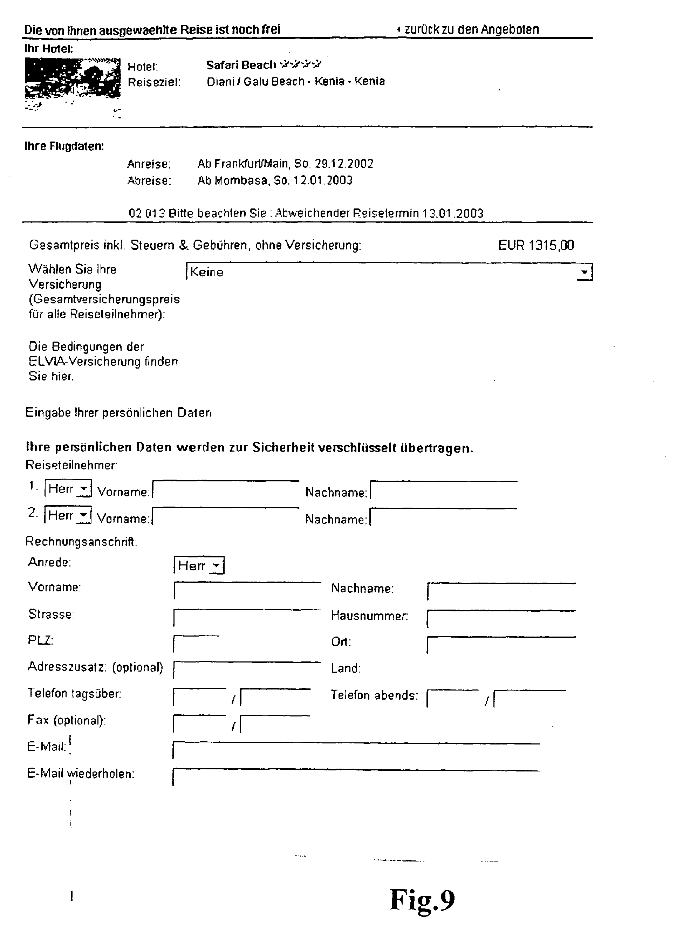

Wird hier eine Reise ausgewählt, so kann der eigentliche Buchungsvorgang beginnen, bei dem persönliche Daten übermittelt werden. Die Reiseauswahl ist an dieser Stelle abgeschlossen. Der Buchungsvorgang erfolgt mittels einer üblichen Maske, wie sie in Fig. 9 dargestellt ist. Dort werden persönliche Daten etc eingegeben. Solche Masken sind bekannt und brauchen hier nicht weiter erläutert werden.

Das beschriebene Verfahren basiert auf Fuzzy Logic, wodurch gewährleistet ist, daß stets ein Ergebnis angezeigt wird, solange noch Daten in der Datenbank vorhanden sind. Darüberhinaus ist das Verfahren schnell und vermeidet überflüssige Zugriffe auf die Datenbank.

## Patentansprüche

1. Verfahren zur Auswahl eines oder mehrerer Datensätze aus einer Datenbank, wobei jeder Datensatz aus Werten zu einem Eigenschaften repräsentierenden Parametersatz aus einer konstanten Anzahl unterschiedlicher Parameter besteht, mit den Schritten
(a) Eingabe eines oder mehrerer Auswahlkriterien,
(b) Lesen und Gruppieren der Datensätze, wobei die Gruppierung der Datensätze aus der Datenbank vor der Eingabe der Auswahlkriterien erfolgt und die so gruppierten Datensätze vor der Eingabe der Auswahlkriterien gesondert in einem Speicher gespeichert werden, und
(c) Ausgabe ausgewählter Datensätze,
wobei
(d) die Gruppierung der Datensätze folgende Schritte umfasst:
(i) Auswahl der Parameter, für welche Auswahlkriterien vorliegen und für welche unterschiedliche Werte in der Datenbank vorliegen,
(ii) Erstellen von Listen zu jedem dieser Parameter, wobei die Listen jeden vorkommenden Wert des Parameters nur einmal enthält, und
(iii) Erstellen von gruppierten Datensätzen mit Werten, die in Form von boolschen Werten oder als Integer vorliegen und angeben, an welcher Stelle der Dateninhalt in der zugehörigen Liste steht,
(e) die Übereinstimmung der Datensätze mit den Auswahlkriterien nach einer vorgegebenen Zuordnungsvorschrift bestimmt wird und eine sortierte Ergebnisliste für die Ausgabe erzeugt wird, wobei die Sortierung der Datensätze nach der Qualität der Übereinstimmung mit den Auswahlkriterien erfolgt,
(f) die Zuordnungsvorschrift jedem Abstand eines IST-Wertes vom gewünschten SOLLWert eine Kombinationsgewichtung zugeordnet wird,
(g) für jedes Auswahlkriterium, für welches ein Grad der Unschärfe auswählbar ist, eine Optionsgewichtung aus einen Nutzereingabe bestimmt wird, und
(h) für jeden Datensatz eine Gesamtgewichtung bestimmt wird, welche sich berechnet nach:
(a') Zuordnung einer Gruppengewichtung für wenigstens zwei Parameter einer Gruppierung
(b') Berechnung der Produkte aus der Kombinationsgewichtung eines Wertes, der Optionsgewichtung des zugehörigen Parameters und der Gruppengewichtung dieses Parameters, für eine Gruppe,
(c') Aufsummieren aller Produkte eines Datensatzes aus Schritt (b') und
(d') Berechnung der Produkte aus der Optionsgewichtung und der Gruppengewichtung für die Parameter einer Gruppe,
(e') Aufsummieren der in Schritt (d') für alle Parameter berechneten Produkte, und
(f) Division der Summe aus Schritt (a') durch die Summe aus Schritt (e'),
(i) eine Trefferliste nach Ergebnis aus Schritt (h) sortiert wird.

2. Verfahren nach Anspruch 1, **dadurch gekennzeichnet, dass** wenigstens ein Auswahlkriterium mit einer Unschärfe berücksichtigt wird.

3. Verfahren nach Anspruch 2, **dadurch gekennzeichnet, dass** der Grad der Unschärfe auswählbar ist.

4. Verfahren nach einem der vorgehenden Ansprüche, **dadurch gekennzeichnet, dass** für jeden Datensatz eine mittlere Kombinationsgewichtung als arithmetischer Mittelwert der einzelnen Kombinationsgewichtungen bestimmt wird.

5. Verfahren nach einem der vorgehenden Ansprüche, **dadurch gekennzeichnet, dass** die Gewichtungen normiert werden.

6. Verfahren nach einem der vorgehenden Ansprüche, **dadurch gekennzeichnet, dass** die Startvorgabe für eine Optionsgewichtung höher ist, wenn eine Eingabe eines Auswahlkriteriums erfolgt, als wenn das Auswahlkriterium auf einer Startvorgabe belassen wird.

7. Verfahren nach einem der vorgehenden Ansprüche, **dadurch gekennzeichnet, dass** zwei oder mehr Auswahlkriterien zu einem gemeinsamen Parameter zusammengefasst werden.

## Claims

1. Method for the selection of one or more data sets from a data base, wherein each data set consists of values regarding the properties of a representing parameter set of a constant number of different parameters, comprising the steps of
(a) entering one or mor selection criteria,
(b) reading and classifying the data sets, wherein the classifying of the data sets from the data base is effected before the entering of the selection criteria and the data sets classified in such a way are separately stored in a store, and
(c) output of selected data sets,
wherein
(d) the classifying of the data sets comprises the following steps:
(i) selection of parameters where selection criteria are present and where there are different values in the data base present,
(ii) generating a list for each of these parameters, wherein the lists comprise each occurring value of the parameter only once, and
(iii) generating of classified data sets with values in the form of boole values or in the form of integers and which indicate at which position the data content is present in the corresponding list,
(e) the coincidence of the data sets with selection criteria is determined according to a given relationship and a classified result list is generated for the output, wherein the classification of the data sets is effected according to the quality of the coincidence with the selection criteria,
(f) the relationship allocates each distance of a value from a desired target value to a combination weight,
(g) an option weight is determined from a user input for each selection criterium where a degree of fuzziness can be selected, and
(h) an overall weight is determined for each data set, which is calculated according to:
(a') Allocating of a group weight for at least two parameters of a class,
(b') Calculating the products of the combination weight of a value, the option weight of the corresponding parameter and the class weight of this parameter for a class,
(c') adding all products of a data set of step (b'), and
(d') calculating the products of an option weight and the class weight of a class,
(e') adding the products calculated in step (d') for all parameters, and
(f') dividing the sum of step (a') by the sum of step (e').
(i) a hit list is sorted according to the result of step (h)

2. Method according to claim 1, **characterized in that** at least one selection criterium is taken into account with a fuzzyness.

3. Method according to claim 2, **characterized in that** the degree of fuzzyness can be selected.

4. Method according to any of the preceding claims, **characterized in that** a mean combination weight can be determined for each data set from the arithmetic mean value of the individual combination weights.

5. Method according to any of the preceding claims, **characterized in that** the weights are normalized.

6. Method according to any of the preceding claims, **characterized in that** a start value is higher in the option weight if an input of a selection criterium is made than if the selection criterium is left to be the start value.

7. Method according to any of the preceding claims, **characterized in that** two or more selection criteria are summarized in one common parameter.

## Revendications

1. Procédé destiné à la sélection d'un ou plusieurs enregistrements de données provenant d'une banque de données, chaque enregistrement de données se composant de valeurs attribuées à un jeu de paramètres représentant des propriétés se composant d'un nombre constant de différents paramètres, comportant les étapes de
(a) entrée d'un ou de plusieurs critères de sélection,
(b) lecture et regroupement des enregistrements de données, le regroupement des enregistrements de données provenant de la banque de données étant effectué avant l'entrée des critères de sélection et les enregistrements de données ainsi regroupés étant mémorisés à part dans une mémoire avant l'entrée des critères de sélection, et,
(c) édition des enregistrements de données sélectionnés,
(d) le regroupement des enregistrements de données comprenant les étapes suivantes :
(i) sélection des paramètres pour lesquels il existe des critères de sélection ainsi que différentes valeurs dans la banque de données,
(ii) création de listes pour chacun de ces paramètres, les listes ne comportant chaque valeur de paramètre existante qu'une seule fois, et
(iii) création d'enregistrements de données regroupés à l'aide de valeurs présentes sous forme de valeurs booléennes ou d'intégrateurs, et indication de l'endroit de la liste associée dans lequel se trouve le contenu des données,
(e) la correspondance des enregistrements de données avec les critères de sélection étant déterminée d'après une consigne d'attribution prédonnée et une liste de résultats triés étant générée pour l'édition, le tri des enregistrements de données étant effectué selon la qualité de la correspondance avec les critères de sélection,
(f) une pondération de combinaison étant attribuée à chaque écart de valeur effective par rapport à la valeur de consigne souhaitée,
(g) une pondération d'option provenant d'une entrée utilisateur étant déterminée pour chaque critère de sélection pour lequel un degré d'inexactitude peut être sélectionné, et
(h) une pondération globale étant déterminée pour chaque enregistrement de données, pondération qui se calcule d'après:
(a') l'attribution d'une pondération de groupe pour au moins deux paramètres d'un regroupement,
(b') le calcul des produits de la pondération de combinaison d'une valeur, de la pondération d'option du paramètre associé et de la pondération de groupe de ce paramètre, pour un groupe,
(c') la totalisation de tous les produits d'un enregistrement de données de l'étape (b') et
(d') le calcul des produits de la pondération d'option et de la pondération de groupe pour les paramètres, d'un groupe,
(e') la totalisation des produits calculés à l'étape (d') pour tous les paramètres, et
(f') la division de la somme de l'étape (a') par la somme de l'étape (e'),
(i) une liste de réponses pertinentes étant triée d'après le résultat de l'étape (h).

2. Procédé selon la revendication 1, **caractérisé en ce qu'**au moins un critère de sélection présentant une inexactitude est pris en compte.

3. Procédé selon la revendication 2, **caractérisé en ce que** le degré d'inexactitude peut être sélectionné.

4. Procédé selon l'une quelconque des revendications précédentes, **caractérisé en ce qu'**une pondération de combinaison moyenne est déterminée pour chaque enregistrement sous forme de moyenne arithmétique de chacune des pondérations de combinaison.

5. Procédé selon l'une quelconque des revendications précédentes, **caractérisé en ce que** les pondérations sont normalisées.

6. Procédé selon l'une quelconque des revendications précédentes, **caractérisé en ce que** le démarrage par défaut pour une pondération d'option est plus élevé en cas d'entrée d'un critère de sélection que lorsque le critère de sélection s'en tient au démarrage par défaut.

7. Procédé selon l'une quelconque des revendications précédentes, **caractérisé en ce que** deux critères de sélection ou plus sont réunis pour former un paramètre commun.
